# FASCICULE DE BREVET EUROPEEN

(11) **EP 2 111 483 B1**
(45) Date de publication et mention de la délivrance du brevet: **29.04.2020**
(21) Numéro de dépôt: 08761757.7
(22) Date de dépôt: 11.01.2008
(51) Int. Cl.: C23F 11/10, C09D 5/08

(54) **INHIBITEUR DE CORROSION**
KORROSIONSSCHUTZMITTEL
CORROSION INHIBITOR

(30) Priorité: 11.01.2007 FR 0700204
(43) Date de publication de la demande: 28.10.2009
(73) Titulaire: Ascotec, 42320 La Grand Croix (FR)
(72) Inventeur: ROUVREAU, Sabine, F-32320 La Grand Croix (FR); GAILLON, Christine, F-42290 Sorbiers (FR)
(74) Mandataire: Verriest, Philippe
(86) Numéro de dépôt international: PCT/FR2008/000036
(87) Numéro de publication internationale: WO 2008/107529

(56) Documents cités:
- EP-A- 0 739 966
- WO-A-96/37562
- WO-A-2006/029326
- WO-A1-2006/122025
- FR-A1- 2 738 254
- JP-A- 7 258 870
- US-A1- 2004 077 751

## Description

L'invention concerne un inhibiteur de corrosion, destiné à incorporer un revêtement, tel qu'une peinture, une laque ou un vernis, en vue de son application sur un support partiellement ou totalement métallique, à traiter, à préserver, ou à préparer avant le dépôt d'un revêtement ou tout autre couche.

On connaît selon la demande de brevet EP835289A une composition d'enduction comprenant un liant organique filmogène et un inhibiteur de corrosion. Ce dernier est un sel ou un amide obtenu par réaction entre un sel ou un amide d'un acide carboxylique et un aminosilane.

Le document US2006/0127681A1 décrit une composition aqueuse destinée au traitement d'une surface métallique qui comprend l'association d'un silane et d'un chélate métallique pour inhiber la corrosion et un composé organique filmogène. Même enrichie avec d'autres agents d'inhibition, une telle composition ne possède pas une résistance à la corrosion suffisamment élevée, en particulier quand la surface est exposée à des conditions sévères de vieillissement.

Le document JPH07258870A décrit une composition aqueuse d'un aminosilane en tant qu'agent anti-rouille en mélange avec un composé azolé et un acide carboxylique, la composition étant appliquée sur la surface d'un support en cuivre de circuits imprimés, afin d'en améliorer les propriétés de résistance à la corrosion, à la chaleur, au pelage.

EP0739966A divulgue un antigel comprenant un inhibiteur de corrosion à base d'un silane organique, d'un composé azolé et d'un acide carboxylique, ledit antigel étant destiné à incorporer un fluide caloporteur, notamment pour des moteurs automobiles.

FR2738254A1 décrit un inhibiteur de corrosion comprenant de l'allantoïne ou un dérivé de l'allantoïne, un silane organique et un acide carboxylique, cet inhibiteur étant destiné à incorporer un lubrifiant tel qu'une huile lubrifiante, un antigel, un liquide de frein.

WO 96/37562 A divulgue l'utilisation d'une composition inhibitrice de corrosion comprenant un aminosilane qui est incorporée dans un revêtement de type "primer" (peinture) pour une surface métallique, en particulier en aluminium ou en alliage d'aluminium.

La Demanderesse a mis au point une composition pour l'inhibition de la corrosion combinant au moins trois ingrédients agissant en synergie, lui conférant des performances d'inhibition très intéressantes.

Ainsi, l'invention concerne l'utilisation d'une composition selon la revendication 1 comprenant, en combinaison, à titre d'ingrédients actifs, un ou plusieurs aminosilanes a), un ou plusieurs composés azolés b) et au moins un composé c) choisi parmi les acides carboxyliques et les amines grasses, pour préparer un inhibiteur de corrosion destiné à incorporer un revêtement choisi parmi les peintures, les laques et les vernis, ledit revêtement étant destiné à revêtir un support partiellement ou totalement métallique.

Par aminosilane, on entend, selon l'invention, un composé qui comprend au moins une fonction amine, qu'elle soit primaire, secondaire ou tertiaire, qui peut être liée à toute autre fonction, par exemple fonction carbonyle, et qui comprend au moins un atome de silicium.

Un composé azolé signifie un composé comportant au moins un hétérocycle pentagonal azoté qui peut comprendre dans ledit cycle un autre hétéroatome choisi par exemple parmi l'azote, l'oxygène et le soufre. Les cycles pyrrole, pyrazole, imidazole, triazole, tétrazole, oxazole, isoxazole, thiazole, isothiazole appartiennent à cette famille d'hétérocycles. La littérature décrit des composés azolés (A Le Gal la Salle et al., Mémoires et Etudes scientifiques Revue de Métallurgie, Mai 1992, page 301-310) possédant des propriétés de protection du cuivre contre la corrosion par des composés azolés. Tout composé azolé présentant de telles propriétés entre dans la présente définition.

La suite de la description s'attachera à préciser les ingrédients actifs préférentiels conduisant à une efficacité optimale.

Les ingrédients actifs employés pouvant être à l'état solide, une composition utilisée selon l'invention comprend donc avantageusement un solvant ou un mélange de solvants dans lequel les ingrédients sont solubilités. De préférence, et pour une action optimale, ce solvant est essentiellement exempt d'eau, mais toute présence d'eau, apportée par exemple par un des ingrédients ne nuit pas à la synergie. Ainsi, certains des ingrédients disponibles dans le commerce sont vendus dans une forme aqueuse, leur incorporation en l'état n'affecte pas le pouvoir de la composition. De même, une composition utilisée selon l'invention s'avère très efficace dans une peinture à l'eau.

En fonction des ingrédients actifs qu'il retiendra, l'homme du métier compétent est à même de sélectionner un solvant ou un mélange de solvants approprié. Le dipropylène glycol méthyléther est un exemple.

S'agissant du ou des aminosilanes, en tant qu'ingrédient actif a) d'une composition utilisée selon l'invention, on retient avantageusement les composés qui répondent à la formule (I) (NR1R2)ₙXSiR3R4R5, dans laquelle n est un entier au moins égal à 1, R1 et R2, indépendamment l'un de l'autre, représentent l'hydrogène, un groupe alkyle de préférence en C1-C9, linéaire, cyclique ou ramifié, éventuellement substitué, un groupe aromatique, éventuellement substitué, un groupe carboxylique, ester, amide ; X représente un radical alkylène de préférence en C1-C20, linéaire, cyclique ou ramifié, éventuellement substitué et/ou interrompu par un ou des hétéroatomes, un radical alkylidène en C2-C20, linéaire, cyclique ou ramifié, éventuellement substitué et/ou interrompu par un ou des hétéroatomes, R3, R4 et R5, indépendamment les uns des autres, représentent l'hydrogène, un groupe alkyle en C1-C9, linéaire, cyclique ou ramifié, éventuellement substitué, un groupe alkoxy en C1-C9, linéaire, cyclique ou ramifié, éventuellement substitué, un groupe aromatique, éventuellement substitué.

Concernant le ou les acides carboxyliques, en tant qu'ingrédients actifs c) d'une composition utilisée selon l'invention, ils sont, dans des variantes préférées, choisis parmi les acides carboxyliques répondant à la formule (II) R6COOH dans laquelle R6 représente un groupe aromatique, éventuellement substitué par au moins un substituant choisi parmi les groupes alkyles en C1-C9, les groupes alkoxy en C1-C9, les fonctions carboxylique, amine, thiol, hydroxyle, nitrite.

Concernant la ou les amines grasses, en tant qu'ingrédients actifs c) dans une composition utilisée selon l'invention, elle sera avantageusement choisie parmi les amines répondant à la formule (III) R7(NR8R9)ₘNR10R11 dans laquelle m est égal à 0 ou 1, R7 représente une chaîne hydrocarbonée d'acide gras, R8 et R9, indépendamment l'un de l'autre, représentent l'hydrogène, un radical alkylène en C1-C9, linéaire, cyclique ou ramifié, éventuellement substitué et/ou interrompu par un ou des hétéroatomes, un radical alkylidène en C2-C9, linéaire, cyclique ou ramifié, éventuellement substitué et/ou interrompu par un ou des hétéroatomes, et R10 et R11, indépendamment l'un de l'autre, représentent l'hydrogène, un groupe alkyle en C1-C9, linéaire, cyclique ou ramifié, éventuellement substitué et/ou interrompu par un ou des hétéroatomes, un groupe alkoxy, éventuellement répété, un radical alkylidène en C2-C9, linéaire, cyclique ou ramifié, éventuellement substitué et/ou interrompu par un ou des hétéroatomes.

Comme indiqué précédemment, une composition pour l'inhibition de la corrosion peut comprendre un ou plusieurs ingrédients actifs c). Ces derniers peuvent consister en plusieurs acides carboxyliques, en plusieurs amines grasses, et en tout mélange d'acides carboxyliques et d'amines grasses, en particulier ceux définis précédemment.

Le ou les aminosilanes a) illustrant la définition donnée précédemment et préférentiellement utilisés dans une composition utilisée selon l'invention, peuvent être choisis parmi les suivants :
3-aminopropyltrimethoxysilane
3-aminopropyltriethoxysilane
2-aminoéthyl-3-aminopropyltriméthoxysilane
triamino-fonctionnel propyltriméthoxysilane
bis(3-triethoxysilylpropyl)amine
N-(n-butyl)-3-aminopropyltriméthoxysilane
2-aminoethyl-3-aminopropylméthyldimethoxysilane
3-aminopropylmethyldiéthoxysilane
3-aminopropylethyldiéthoxysilane
3-uréidopropyltriéthoxysilane
N-cyclohexyl-3-aminopropyltrimethoxysilane
N-cyclohexylaminomethyhnethyldiethoxysilane
N-cyclohexylaminomethyltriethoxysilane
N-phenylaminomethyltrimethoxysilane
N-trimethoxysilylmethyl-O-methyl-carbamate
N-dimethoxy(methyl)silylmethyl-O-methyl-carbamate
tri-t-butylaminosilane
triphenylaminosilane,
ainsi que les aminosilanes du type de ceux distribués par DEGUSSA et identifiés par les noms et références commerciales suivants :
amino/alkyl-fonctionnel siloxane co-oligomer aqueux, Dynasylan HS2627 ou HS2905
triamino/alkyl-fonctionnel siloxane co-oligomer aqueux, Dynasylan HS2775
diamino/alkyl-fonctionnel siloxane co-oligomer aqueux, Dynasylan HS2776
amino/vinyl-fonctionnel siloxane co-oligomer aqueux, Dynasylan HS2781 ou HS2907
amino/methacrylate-fonctionnel siloxane co-oligomer aqueux, Dynasylan HS2929.

Le ou les composés azolés b) illustrant la définition donnée précédemment et utilisés dans une composition utilisée selon l'invention, peuvent être choisis parmi les suivants :
le mercaptobenzothiazole
le benzotriazole
le mercaptobenzimidazole
le tolyltriazole
le mercaptobenzoxazole
le benzimidazole
l'amino-2 méthoxy-6 benzothiazole.

Le ou les acides carboxyliques c) illustrant la définition donnée précédemment et préférentiellement utilisés dans une composition utilisée selon l'invention, peuvent être choisis parmi l'acide benzoïque, l'acide 4-tert-butyl benzoïque, l'acide aminobenzoïque, l'acide toluique, l'acide nitrobenzoïque, l'acide phtalique, l'acide éthylbenzoïque, l'acide propylbenzoïque, l'acide n-butylbenzoïque. La ou les amines grasses c) sont illustrées par les amines suivantes :
les cocoamines éthoxylées ; elles répondent à la formule générale (III) précitée où m est nul, R10 et R11 représentent chacun CH₂CH₂OH ou un groupe polyéthoxylé, et R7 représente la chaîne carbonée des acides gras de l'huile de coprah,
les amines de suif éthoxylées ; elles répondent à la formule générale (III) précitée où m est nul, R10 et R11 représentent chacun CH₂CH₂OH ou un groupe polyéthoxylé, et R7 représente la chaîne carbonée des acides gras du suif ; à titre d'exemple, on peut citer les imino-2,2'bis-dérivés-N-alkyles de suif et les amines de suif alkyl éthoxylées,
les oléyl amines éthoxylées ; elles répondent à la formule générale (III) précitée où m est nul, R10 et R11 représentent chacun CH₂CH₂OH ou un groupe polyéthoxylé, et R7 représente la chaîne carbonée oléyle,
les diamines, notamment celles répondant à la formule (III) précitée dans laquelle m est égal à 1, R8, R10 et R11 représentent l'hydrogène, et R9 représente CH₂CH₂, par exemple la (Z)-N-9-octadécénylpropane-1,3-diamine, les N-coco-alkyltriméthylènediamines et les N-suif-alkyltriméthylènediamines.

Des compositions intéressantes pour l'utilisation selon l'invention sont décrites ci-après ; elles répondent aux caractéristiques données, ces caractéristiques étant considérées seules ou en combinaison l'une ou les unes avec l'autre ou les autres.

Une telle composition comprend au moins un aminosilane a) choisi parmi le 3-aminopropyltriethoxysilane et l'amino/alkyl-fonctionnel siloxane co-oligomer aqueux, un composé azolé b) choisi parmi le mercaptobenzothiazole, le benzotriazole et le mercaptobenzimidazole, et un composé c) choisi parmi l'acide benzoïque, l'acide 4-tert-butyl benzoïque, l'acide nitrobenzoïque, les imino-2,2'bis-dérivés-N-alkyles de suif, les amines de suif alkyl éthoxylées, la (Z)-octadec-9-enylamine éthoxylée et la (Z)-N-9-octadécényl propane-1,3-diamine.

Elle comprend au moins deux composés c). Dans ce cas, elle comprend avantageusement l'acide benzoïque et au moins l'un de l'acide 4-tert-butyl benzoïque et de l'acide nitrobenzoïque. Elle peut aussi comprendre au moins l'un de l'acide benzoïque, l'acide 4-tert-butyl benzoïque et l'acide nitrobenzoïque, et l'une des amines suivantes : les imino-2,2'bis-dérivés-N-alkyles de suif, les amines de suif alkyl éthoxylées, la (Z)-octadec-9-enylamine éthoxylée, la (Z)-N-9-octadécénylpropane-1,3-diamine.

Une composition peut comprendre au moins trois composés c). Dans une variante favorable, elle comprend au moins deux composés choisis parmi l'acide benzoïque, l'acide 4-tert-butyl benzoïque et l'acide nitrobenzoïque, et au moins un composé choisi parmi les imino-2,2'bis-dérivés-N-alkyles de suif, les amines de suif alkyl éthoxylées, la (Z)-octadec-9-enylamine éthoxylée, la (Z)-N-9-octadécénylpropane-1,3-di amine.

Selon l'invention, la proportion du ou des aminosilanes a) varie de 5 à 25%, de préférence de 10 à 20%, en poids du poids de la composition. Celle du ou des composés azolés b) varie de 2 à 30%, de préférence de 5 à 15%, en poids du poids de la composition. Et celle du ou des composés c) varie de 5 à 45%, de préférence de 15 à 35%, en poids du poids de la composition, la proportion du ou des acides carboxyliques variant de 5 à 25%, de préférence de 5 à 15%, en poids du poids de la composition, et/ou celle de la ou des amines grasses variant de 5 à 20%, de préférence de 10 à 20%, en poids du poids de la composition.

Le revêtement dans lequel ladite composition telle que définie précédemment est incorporée selon l'invention peut être choisi parmi toute peinture, laque ou vernis. Comme il ressort des exemples, la composition précitée n'affecte pas les qualités du revêtement dans lequel elle est mélangée, ses propres propriétés vis-à-vis de la corrosion ne sont pas non plus affectées par son mélange dans le revêtement.

Le support d'application d'un revêtement comprenant une composition précitée est partiellement ou totalement métallique.

Les exemples ci-après vont permettre d'illustrer plus en détails la formulation, l'obtention de compositions de l'invention, et leurs propriétés. La synergie entre les trois ingrédients actifs est en particulier mise en évidence par comparaison entre leur efficacité (exemple 2) et celle de compositions ne contenant que deux des trois ingrédients actifs.

### Exemple 1 : Préparation d'une composition pour l'inhibition de la corrosion de l'invention

Les formulations rassemblées dans le tableau 1 ci-après sont préparées, les proportions des ingrédients étant exprimées en % en poids par rapport au poids final de la formulation.

**Tableau 1**

| N° formulation | Aminosilane a) | | Composé azolé b) | | Composé c) | | | |
|---|---|---|---|---|---|---|---|---|
| | | | | | Acide | Amine grasse | | |
| 1 | I | 16,7 | MBI | 8,3 | - | β | 16,7 | |
| 2 | I | 16,7 | MBT/MBI | 6/2,3 | - | β | 16,7 | |
| 3 | II | 13,3 | MBT | 13,0 | - | β | 13,3 | |
| 4 | I | 14,3 | MBT | 21,4 | - | β | 14,3 | |
| 5 | I | 16,7 | MBT | 7,9 | PTBBA | 8,2 | - | |
| 6 | I | 5,4 | MBT | 2,6 | PTBBA | 19,5 | δ | 16,0 |
| 7 | I | 16,3 | BZT | 7,6 | PTBBA | 10,6 | - | |

Avec

| | | |
|---|---|---|
| I | = | 3-aminopropyltriéthoxysilane |
| II | = | aminolalkyl-fonctionnel siloxane co-oligomer aqueux |
| MBT | = | mercaptobenzothiazole |
| MBI | = | mercaptobenzimidazole |
| BZT | = | benzotriazole |
| β | = | amine de suif alkyl éthoxylée |
| δ | = | (Z)-N-9-octadécénylpropane-1,3-diamine |
| PTBBA | = | acide 4-tert-butylbenzoïque |

La composition est préparée comme suit : on ajoute à du dipropylène glycol méthyléther, les ingrédients actifs mentionnés dans le tableau 1. La composition est ensuite complétée à 100% en poids par le solvant précité.

### Exemple 2 : efficacité d'une composition selon l'invention vis-à-vis de la corrosion.

### A) Milieu d'essai

Les formules de l'exemple 1 ont été mélangées, à divers pourcentages, dans des peintures de nature variée. Les peintures utilisées sont décrites ci-dessous.

| | |
|---|---|
| PEINTURE 1 : | Peinture monocomposant solvantée |
| | Résine de type alkyde |
| | CPV (concentration pigmentaire volumique) =4 |
| | Contient 1% de phosphate de zinc |
| PEINTURE 2: | Peinture monocomposant solvantée |
| | Résine de type copolymère acrylique/uréthane |
| | CPV =12 |
| | Ne contient pas de pigment anticorrosion |
| PEINTURE 3: | Peinture monocomposant hydrodiluable |
| | Résine de type acrylique |
| | CPV=23 |
| | Ne contient pas de pigment anticorrosion |
| PEINTURE 4: | Peinture monocomposant hydrodiluable |
| | Résine de type vinyl-acrylique |
| | CPV=6 |
| | Ne contient pas de pigment anticorrosion |
| PEINTURE 5: | Peinture monocomposant hydrodiluable |
| | Résine de type alkyde |
| | CPV=14 |
| | Contient 3% de phosphate de zinc |

Chaque peinture est aussi testée sans inhibiteur de corrosion à titre de témoin.

### B) Méthode d'essai

La méthode d'essai utilisée est celle décrite dans la norme ISO 9227 dont l'intitulé est le suivant : « Essais de corrosion en atmosphère artificielle : essais au brouillard salin ».

### C) Conditions d'essai

### a) Application de la peinture

La peinture est appliquée sur des supports en acier ou en acier galvanisé de type Q-panel, à l'aide d'un applicateur de type spirale ou réservoir, de façon à obtenir une épaisseur homogène sur tout le support.

Les supports sont séchés durant 21 jours dans un local tempéré (entre 21 et 23°C).

L'épaisseur du film de peinture sec mesurée à la fin de la période de séchage est comprise entre 55 et 60 µm.

### b) Préparation des supports peints

Avant de les placer dans l'enceinte du Brouillard Salin, les supports peints sont préparés de la façon suivante :
- les bords et le dos sont protégés à l'aide d'un ruban adhésif imperméable
- dans le tiers inférieur du support, une rayure en forme de V à l'envers est provoquée intentionnellement à l'aide d'un scléromètre. La rayure doit traverser la peinture afin de faire apparaître le métal sans le rayer profondément.

### c) Durée d'essai

La durée d'essai dépend du système de peinture à tester. Le tableau 2 indique la durée d'essai en fonction de chaque peinture testée.

**Tableau 2**

| Peinture 1 | Peinture 2 | Peinture 3 | Peinture 4 | Peinture 5 |
|---|---|---|---|---|
| 600 heures | 600 heures | 300 heures | 250 heures | 400 heures |

### D) Interprétation des résultats

Les résultats donnent les informations suivantes sur l'aspect des supports à la fin de la période d'essai :
- le niveau de protection du support exprimé par le Facteur de Protection contre la Corrosion (FPC) qui est la somme des deux facteurs suivants:
   ∘ le FPC du film de peinture (FPC_{film}): de 0 à 6, le grade 6 définissant un niveau de protection maximum, et
   ∘ le FPC du support métallique (FPC_{métal}) sous le film de peinture: de 0 à 6, le grade 6 définissant un niveau de protection maximum ;

Plus le FPC est élevé, plus l'efficacité d'inhibition de la corrosion est grande.
- le niveau de dégradation du film de part et d'autre de la blessure (appelé délamination) mesuré directement sur le support et exprimé en mm.
   Plus la délamination est faible, plus l'efficacité d'inhibition de la corrosion est grande.

### E) Résultats

Les résultats obtenus apparaissent dans les tableaux 3-9 suivants.

**Tableau 3 : Peinture 1, support acier**

| N° Formule | FPC_{film} | FPC_{métal} | FPC =FPC_{film}+FPC_{métal} | Délamination |
|---|---|---|---|---|
| Témoin | 3,8 | 3,8 | 7,6 | 30 |
| 5 à 1% | 4,1 | 4,5 | 8,6 | 20 |
| 5 à 2% | 4,2 | 4,4 | 8,6 | 15 |
| 6 à 1% | 4,1 | 4,3 | 8,4 | 15 |
| 6 à 2% | 5,2 | 5,2 | 10,4 | 9 |
| 7 à 1% | 4,5 | 4,6 | 9,1 | 15 |
| 7 à 2% | 5,0 | 5,0 | 10,0 | 11 |

**Tableau 4 : Peinture 1, support acier galvanisé**

| N° Formule | FPC_{film} | FPC_{métal} | FPC =FPC_{film}+FPC_{métal} | Délamination |
|---|---|---|---|---|
| Témoin | 4,1 | 4,1 | 8,2 | 10 |
| 5 à 1 % | 4,1 | 4,3 | 8,4 | 7 |
| 5 à 2% | 4,3 | 4,3 | 8,6 | 4 |
| 6 à 1 % | 4,2 | 4,4 | 8,6 | 6 |
| 6 à 2% | 4,5 | 4,8 | 9,3 | 4 |
| 7 à 1 % | 4,6 | 4,7 | 9,3 | 3 |
| 7 à 2% | 4,7 | 4,7 | 9,4 | 1 |

**Tableau 5 : Peinture 2, support acier**

| N° Formule | FPC_{film} | FPC_{métal} | FPC =FPC_{film}+FPC_{métal} | Délamination |
|---|---|---|---|---|
| Témoin | 0,0 | 3,8 | 3,8 | 20 |
| 5 à 1% | 4,1 | 4,5 | 8,6 | 14 |
| 5 à 2% | 4,5 | 4,8 | 9,3 | 10 |
| 6 à 1 % | 2,0 | 4,4 | 5,4 | 6 |
| 6 à 2% | 2,8 | 4,4 | 7,2 | 6 |
| 7 à 1% | 6,0 | 6,0 | 12,0 | 2 |
| 7 à 2% | 6,0 | 6,0 | 12,0 | 1 |

**Tableau 6 : Peinture 2, support acier galvanisé**

| N° Formule | FPC_{film} | FPC_{métal} | FPC =FPC_{film}+FPC_{métal} | Délamination |
|---|---|---|---|---|
| Témoin | 2,1 | 4,1 | 6,2 | 3 |
| 5 à 1% | 6,0 | 6,0 | 12,0 | 1 |
| 5 à 2% | 6,0 | 6,0 | 12,0 | 1 |
| 6 à 1% | 5,1 | 5,1 | 10,2 | 1 |
| 6 à 2% | 5,2 | 5,2 | 10,4 | 1 |
| 7 à 1% | 6,0 | 6,0 | 12,0 | 2 |
| 7 à 2% | 6,0 | 6,0 | 12,0 | 0,5 |

**Tableau 7 : Peinture 3, support acier**

| N° Formule | FPC_{film} | FPC_{métal} | FPC =FPC_{film}+FPC_{métal} | Délamination |
|---|---|---|---|---|
| Témoin | 1,0 | 1,2 | 2,2 | 25 |
| 1 à 1% | 3,7 | 3,5 | 7,2 | 17 |
| 1 à 2% | 4,5 | 4,4 | 8,9 | 8 |
| 4 à 1% | 5,3 | 5,3 | 10,6 | 11 |
| 4 à 2% | 5,5 | 5,5 | 11,0 | 2 |
| 5 à 1% | 2,6 | 2,3 | 4,9 | 15 |
| 5 à 2% | 6,0 | 6,0 | 12,0 | 3 |

**Tableau 8 : Peinture 4, support acier**

| N° Formule | FPC_{film} | FPC_{métal} | FPC =FPC_{film}+FPC_{métal} | Délamination |
|---|---|---|---|---|
| Témoin | 0,0 | 0,0 | 0,0 | >30 |
| 1 à 1% | 3,8 | 4,2 | 8,0 | 20 |
| 1 à 2% | 5,2 | 5,2 | 10,4 | 4 |
| 4 à 1% | 3,7 | 3,9 | 7,6 | 20 |
| 4 à 2% | 4,8 | 4,9 | 9,7 | 8 |
| 7 à 1% | 4,2 | 4,5 | 8,7 | 15 |
| 7 à 2% | 4,9 | 5,1 | 10,0 | 4 |

**Tableau 9 : Peinture 5, support acier**

| N° Formule | FPC_{film} | FPC_{métal} | FPC =FPC_{film}+FPC_{métal} | Délamination |
|---|---|---|---|---|
| Témoin | 2,1 | 3,7 | 5,8 | 18 |
| 1 à 1% | 3,6 | 3,6 | 7,2 | 6 |
| 1 à 2% | 5,4 | 5,4 | 10,8 | 2 |
| 4 à 1% | 4,9 | 5,3 | 10,2 | 4 |
| 4 à 2% | 5,7 | 5,7 | 11,4 | 1 |
| 7 à 1% | 4,2 | 4,5 | 8,7 | 5 |
| 7 à 2% | 6,0 | 6,0 | 12,0 | 2 |

Cet exemple 2 démontre clairement l'efficacité des compositions de l'invention et illustre la variété des compositions précédemment définies.

### Exemple 3 : exemples comparatifs

L'efficacité des compositions selon l'invention a été comparée à des compositions ne contenant que deux des trois ingrédients actifs a), b) et c). Les formulations A, B, C, D et E ainsi préparées sont présentées dans le tableau 10 ci-après.

**Tableau 10**

| N° formulation | Aminosilane a) | | Composé azolé b) | | Composé c) | | | |
|---|---|---|---|---|---|---|---|---|
| | | | | | Acide | | Amine grasse | |
| A | I | 15,0 | BZT | 7,5 | - | | - | |
| B | I | 15,0 | - | | PTBBA | 7,5 | - | |
| C | I | 15,0 | - | | - | | β | 15,0 |
| D | - | | MBT | 7,5 | PTBBA | 7,5 | - | |
| E | - | | MBT | 7,5 | - | | β | 15,0 |

Avec les définitions précédentes des ingrédients actifs :

| | | |
|---|---|---|
| I | = | 3-aminopropyltriéthoxysilane |
| MBT | = | mercaptobenzothiazole |
| BZT | = | benzotriazole |
| β | = | amine de suif alkyl éthoxylée |
| PTBBA | = | acide 4-tert-butylbenzoïque |

Des essais ont été réalisés dans la Peinture 5 citée précédemment, pendant 400 heures, sur acier. Les résultats sont présentés dans le tableau 11 ci-après.

**Tableau 11 : Peinture 5, support acier**

| N° Formule | FPC_{film} | FPC_{métal} | FPC =FPC_{film}+FPC_{métal} | Délamination |
|---|---|---|---|---|
| Témoin | 2,1 | 3,7 | 5,8 | 18 |
| A à 2% | 2,0 | 3,5 | 5,5 | 16 |
| B à 2% | 2,0 | 3,8 | 5,8 | 18 |
| C à 2% | 1,8 | 3,2 | 5,0 | 18 |
| D à 2% | 0,8 | 1,1 | 1,9 | 20 |
| E à 2% | 0,8 | 0,9 | 1,7 | 20 |

La composition B est complètement inefficace puisque par rapport au témoin elle ne modifie ni le FPC, ni la délamination. Les compositions D et E ne sont pas seulement inefficaces mais au surplus elles nuisent au support par rapport au témoin. Les compositions A et C manifestent une légère inhibition de la corrosion.

## Revendications

1. Utilisation d'une composition comprenant, en combinaison, à titre d'ingrédients actifs, 5 à 25% en poids d'un ou plusieurs aminosilanes a), 2 à 30% en poids d'un ou plusieurs composés azolés b) choisis parmi le mercaptobenzothiazole, le benzotriazole, le mercaptobenzimidazole, le tolytriazole, le mercaptobenzoxazole, le benzimidazole et l'amino-2-méthoxy-6-benzothiazole, et 5 à 45% en poids d'au moins un composé c) choisi parmi les acides carboxyliques et les amines grasses, destinée à incorporer un revêtement choisi parmi les peintures, les laques et les vernis, pour inhiber la corrosion d'un support partiellement ou totalement métallique.

2. Utilisation selon la revendication 1, **caractérisée en ce que** le ou les aminosilanes a) répondent à la formule (I) (NR1R2)ₙXSiR3R4R5, dans laquelle n est un entier au moins égal à 1, R1 et R2, indépendamment l'un de l'autre, représentent l'hydrogène, un groupe alkyle de préférence en C1-C9, linéaire, cyclique ou ramifié, non substitué ou substitué, un groupe aromatique, non substitué ou substitué, un groupe carboxylique, ester, amide ; X représente un radical alkylène en C1-C20, linéaire, cyclique ou ramifié, non substitué ou substitué et/ou interrompu par un ou des hétéroatomes, un radical alkylidène en C2-C20, linéaire, cyclique ou ramifié, non substitué ou substitué et/ou interrompu par un ou des hétéroatomes, R3, R4 et R5, indépendamment les uns des autres, représentent l'hydrogène, un groupe alkyle en C1-C9, linéaire, cyclique ou ramifié, non substitué ou substitué, un groupe alkoxy en C1-C9, linéaire, cyclique ou ramifié, non substitué ou substitué, un groupe aromatique, non substitué ou substitué.

3. Utilisation selon la revendication 1 ou 2, **caractérisée en ce que** le ou les composés c) sont choisis parmi les acides carboxyliques répondant à la formule (II) R6COOH dans laquelle R6 représente un groupe aromatique, non substitué ou substitué par au moins un substituant choisi parmi les groupes alkyles en C1-C9, les groupes alkoxy en C1-C9, les fonctions carboxylique, amine, thiol, hydroxyle, nitrite.

4. Utilisation selon l'une quelconque des revendications 1 à 3, **caractérisée en ce que** le ou les composés c) sont choisis parmi les amines répondant à la formule (III) R7(NR8R9)ₘNR10R11 dans laquelle m est égal à 0 ou 1, R7 représente une chaîne hydrocarbonée d'acide gras, R8 et R9, indépendamment l'un de l'autre, représentent l'hydrogène, un radical alkylène en C1-C9, linéaire, cyclique ou ramifié, non substitué ou substitué et/ou interrompu par un ou des hétéroatomes, un radical alkylidène en C2-C9, linéaire, cyclique ou ramifié, non substitué ou substitué et/ou interrompu par un ou des hétéroatomes, et R10 et R11, indépendamment l'un de l'autre, représentent l'hydrogène, un groupe alkyle en C1-C9, linéaire, cyclique ou ramifié, non substitué ou substitué et/ou interrompu par un ou des hétéroatomes, un groupe alkoxy, pouvant être répété, un radical alkylidène en C2-C9, linéaire, cyclique ou ramifié, non substitué ou substitué et/ou interrompu par un ou des hétéroatomes.

5. Utilisation selon l'une quelconque des revendications 1 à 4, **caractérisée en ce que** :
le ou les aminosilanes a) sont choisis parmi les suivants :
3-aminopropyltrimethoxysilane
3-aminopropyltriethoxysilane
2-aminoéthyl-3-aminopropyltriméthoxysilane
triamino-fonctionnel propyltriméthoxysilane
bis(3-triethoxysilylpropyl)amine
N-(n-butyl)-3-aminopropyltriméthoxysilane
2-aminoethyl-3-aminopropylméthyldimethoxysilane
3-aminopropylmethyldiéthoxysilane
3-aminopropylethyldiéthoxysilane
N-cyclohexyl-3-aminopropyltrimethoxysilane
N-cyclohexylaminomethyhnethyldiethoxysilane
N-cyclohexylaminomethyltriethoxysilane
N-phenylaminomethyltrimethoxysilane
tri-t-butylaminosilane
triphenylaminosilane

6. Utilisation selon l'une quelconque des revendications 1 à 5, **caractérisée en ce que** le ou les composé c) sont choisis parmi l'acide benzoïque, l'acide 4-tert-butyl benzoïque, l'acide aminobenzoïque, l'acide toluique, l'acide nitrobenzoïque, l'acide phtalique, l'acide éthylbenzoïque, l'acide propylbenzoïque, l'acide n-butylbenzoïque, les cocoamines éthoxylées, les amines de suif éthoxylées, par exemple les imino-2,2'bis-dérivés-N-alkyles de suif et les amines de suif alkyl éthoxylées, les oléyl amines éthoxylées, les diamines, par exemple la (Z)-N-9-octadécénylpropane-1,3-diamine, les N-coco-alkyltriméthylènediamines et les N-suif-alkyltriméthylènediamines.

7. Utilisation selon l'une quelconque des revendications 1 à 6, **caractérisée en ce que** la composition comprend au moins un aminosilane a) choisi parmi le 3-aminopropyltriethoxysilane et l'amino/alkyl-fonctionnel siloxane co-oligomer aqueux, un composé azolé b) choisi parmi le mercaptobenzothiazole, le benzotriazole et le mercaptobenzimidazole, et un composé c) choisi parmi l'acide benzoïque, l'acide 4-tert-butyl benzoïque, l'acide nitrobenzoïque, les imino-2,2'bis-dérivés-N-alkyles de suif, les amines de suif alkyl éthoxylées, la (Z)-octadec-9-enylamine éthoxylée et la (Z)-N-9-octadécényl propane-1,3-diamine.

8. Utilisation selon l'une quelconque des revendications 1 à 7, **caractérisée en ce que** la composition comprend l'acide benzoïque et au moins l'un de l'acide 4-tert-butyl benzoïque et de l'acide nitrobenzoïque.

9. Utilisation selon l'une quelconque des revendications 1 à 8, **caractérisée en ce que** la composition comprend au moins l'un de l'acide benzoïque, l'acide 4-tert-butyl benzoïque et l'acide nitrobenzoïque, et l'une des amines suivantes : les imino-2,2'bis-dérivés-N-alkyles de suif, les amines de suif alkyl éthoxylées, la (Z)-octadec-9-enylamine éthoxylée, la (Z)-N-9-octadécényl propane-1,3-diamine.

10. Utilisation selon la revendication 9, **caractérisée en ce que** la composition comprend au moins deux composés choisis parmi l'acide benzoïque, l'acide 4-tert-butyl benzoïque et l'acide nitrobenzoïque, et au moins un composé choisi parmi les imino-2,2'bis-dérivés-N-alkyles de suif, les amines de suif alkyl éthoxylées, la (Z)-octadec-9-enylamine éthoxylée, la (Z)-N-9-octadécénylpropane-1,3-diamine.

11. Utilisation selon l'une quelconque des revendications 1 à 10, **caractérisée en ce que** la proportion du ou des aminosilanes a) varie de 10 à 20%, en poids du poids de la composition.

12. Utilisation selon l'une quelconque des revendications 1 à 11, **caractérisée en ce que** la proportion du ou des composés azolés b) varie de 5 à 15%, en poids du poids de la composition.

13. Utilisation selon l'une quelconque des revendications 1 à 12, **caractérisée en ce que** la proportion du ou des composés c) varie de 15 à 35%, en poids du poids de la composition.

14. Utilisation selon l'une quelconque des revendications 1 à 13, **caractérisée en ce que** ladite composition comprend un solvant ou un mélange de solvants.

## Patentansprüche

1. Verwendung einer Zusammensetzung, in Kombination, als Wirkstoffe, 5 bis 25 Gew.-% eines oder mehrerer Aminosilane a), 2 bis 30 Gew.-% einer oder mehrerer Azolverbindungen b) umfassend, ausgewählt aus Mercaptobenzothiazol, Benzotriazol, Mercaptobenzimidazol, Tolytriazol, Mercaptobenzoxazol, Benzimidazol und Amino-2-Methoxy-6-Benzothiazol, und 5 bis 45 Gew.-% mindestens einer Verbindung c) ausgewählt aus den Carbonsäuren und den Fettaminen, dazu bestimmt, in eine Beschichtung, ausgewählt aus den Anstrichen, Lacken und Firnissen eingearbeitet zu werden, um die Korrosion eines teilweise oder vollständig metallischen Supports zu unterdrücken.

2. Verwendung nach Anspruch 1, **dadurch gekennzeichnet, dass** das oder die Aminosilane a) der Formel (I) (NR1R2)ₙXSiR3R4R5 entsprechen, in der n eine ganze Zahl mindestens gleich 1 ist, R1 und R2 unabhängig voneinander Wasserstoff, eine nicht substituierte oder substituierte lineare, zyklische oder verzweigte Alkyl-Gruppe, vorzugsweise C1-C9, eine nicht substituierte oder substituierte aromatische Gruppe, eine Carboxylgruppe, Ester, Amid repräsentieren; X einen nicht substituierten oder substituierten und/oder durch ein oder mehrere Heteroatome unterbrochenen linearen, zyklischen oder verzweigten Alkylen-Rest C1-C20, einen nicht substituierten oder substituierten und/oder durch ein oder mehrere Heteroatome unterbrochenen linearen, zyklischen oder verzweigten Alkyliden-Rest C2-C20 repräsentiert, R3, R4 und R5 unabhängig voneinander Wasserstoff, eine nicht substituierte oder substituierte lineare, zyklische oder verzweigte Alkyl-Gruppe C1-C9, eine nicht substituierte oder substituierte lineare, zyklische oder verzweigte Alkoxy-Gruppe C1-C9, eine nicht substituierte oder substituierte aromatische Gruppe repräsentiert.

3. Verwendung nach Anspruch 1 oder 2, **dadurch gekennzeichnet, dass** die Verbindung oder Verbindungen c) ausgewählt sind aus den Carbonsäuren, die der Formel (II) R6COOH entsprechen, in der R6 eine nicht substituierte oder durch mindestens einen Substituenten, der aus den Alkyl-Gruppen C1-C9, den Alkoxy-Gruppen C1-C9, den Carboxyl-, Amin-, Thio-, Hydroxyl-, Nitrit-Funktionen ausgewählt wird substituierte aromatische Gruppe repräsentiert.

4. Verwendung nach einem der Ansprüche 1 bis 3, **dadurch gekennzeichnet, dass** die Verbindung oder Verbindungen c) ausgewählt sind aus den Aminen, die der Formel (III) R7(NR8R9)ₘNR10R11 entsprechen, in der m gleich 0 oder 1 ist, R7 eine Fettsäure-Kohlenwasserstoffkette repräsentiert, R8 und R9 unabhängig voneinander Wasserstoff, einen nicht substituierten oder substituierten und/oder durch ein oder mehrere Heteroatome unterbrochenen linearen, zyklischen oder verzweigten Alkylen-Rest C1-C9, einen nicht substituierten oder substituierten und/oder durch ein oder mehrere Heteroatome unterbrochenen linearen, zyklischen oder verzweigten Alkyliden-Rest C2-C9 repräsentieren, und R10 und R11 unabhängig voneinander Wasserstoff, einen nicht substituierten oder substituierten und/oder durch ein oder mehrere Heteroatome unterbrochenen linearen, zyklischen oder verzweigten Alkyl-Rest C1-C9, eine Alkoxy-Gruppe, die wiederholt werden kann, einen nicht substituierten oder substituierten und/oder durch ein oder mehrere Heteroatome unterbrochenen linearen, zyklischen oder verzweigten Alkyliden-Rest C2-C9 repräsentieren.

5. Verwendung nach einem der Ansprüche 1 bis 4, **dadurch gekennzeichnet, dass**:
das oder die Aminosilane a) aus den Folgenden ausgewählt werden:
3-Aminopropyltrimethoxysilan
3-Aminopropyltriethoxysilan
2-Aminoethyl-3-Aminopropyltrimethoxysilan
Triaminofunktionelles Propyltrimethoxysilan
Bis(3-Triethoxysilylpropyl)amin
N-(n-butyl)-3-Aminopropyltrimethoxysilan
2-Aminoethyl-3-Aminopropylmethyldimethoxysilan
3-Aminopropylmethyldiethoxysilan
3-Aminopropylethyldiethoxysilan
N-Cyclohexyl-3-Aminopropyltrimethoxysilan
N-Cyclohexylaminomethyhlethyldiethoxysilan
N-Cyclohexylaminomethyltriethoxysilan
N-Phenylaminomethyltrimethoxysilan
Tri-t-Butylaminosilan
Triphenylaminosilan

6. Verwendung nach einem der Ansprüche 1 bis 5, **dadurch gekennzeichnet, dass** die Verbindung oder Verbindungen c) ausgewählt sind aus Benzoesäure, 4-tert-Butylbenzoesäure, Aminobenzoesäure, Toluylsäure, Nitrobenzoesäure, Phthalsäure, Ethylbenzoesäure, Propylbenzoesäure, n-Butylbenoesäure, ethoxylierten Kokosaminen, ethoxylierten Talgaminen, beispielsweise den Talg-Imino-2,2'bis-N-Alkyl-Derivaten und den ethoxylierten Alkyl-Talgaminen, den ethoxylierten Amin-Oleoylen, den Diaminen, beispielsweise (Z)-N-9-Octadecenylpropan-1,3-Diamin, den N-Kokosalkyltrimethylendiaminen und den N-Talg-Alkyltrimethylendiaminen.

7. Verwendung nach einem der Ansprüche 1 bis 6, **dadurch gekennzeichnet, dass** die Zusammensetzung mindestens ein Aminosilan a) umfasst, ausgewählt aus 3-Aminopropyltriethoxysilan und wässrigem amino- /alkylfunktionellen Siloxan-Co-Oligomer, eine Azolverbindung b) ausgewählt aus Mercaptobenzothiazol, Benzotriazol und Mercaptobenzimidazol, und eine Verbindung c) ausgewählt aus Benzoesäure, 4-tert-Butylbenzoesäure, Nitrobenzoesäure, Talg-Imino-2,2'bis-N-Alkyl-Derivaten, ethoxylierten Alkyl-Talgaminen, ethoxyliertem (Z)-Octadec-9-Enylamin und (Z)-N-9-Octadecenylpropan-1,3-Diamin.

8. Verwendung nach einem der Ansprüche 1 bis 7, **dadurch gekennzeichnet, dass** die Zusammensetzung Benzoesäure und mindestens eines von 4-tert-Butylbenzoesäure und Nitrobenzoesäure umfasst.

9. Verwendung nach einem der Ansprüche 1 bis 8, **dadurch gekennzeichnet, dass** die Zusammensetzung mindestens Benzoesäure und mindestens eines von 4-tert-Butylbenzoesäure und Nitrobenzoesäure und eines der folgenden Amine umfasst: Talg-Imino-2,2'bis-N-Alkyl-Derivate, ethoxylierte Alkyl-Talgamine, ethoxyliertes (Z)-Octadec-9-Enylamin und (Z)-N-9-Octadecenylpropan-1,3-Diamin.

10. Verwendung nach Anspruch 9, **dadurch gekennzeichnet, dass** die Zusammensetzung mindestens zwei Verbindungen umfasst, die ausgewählt sind aus Benzoesäure, 4-tert-Butylbenzoesäure und Nitrobenzoesäure, und mindestens eine Verbindung ausgewählt aus den Talg-Imino-2,2'bis-N-Alkyl-Derivaten, den ethoxylierten Alkyl-Talgaminen, ethoxyliertem (Z)-Octadec-9-Enylamin, (Z)-N-9-Octadecenylpropan-1,3-Diamin.

11. Verwendung nach einem der Ansprüche 1 bis 10, **dadurch gekennzeichnet, dass** die Proportion des oder der Aminosilane a) von 10 bis 20 Gew.-% des Gewichts der Zusammensetzung variiert.

12. Verwendung nach einem der Ansprüche 1 bis 11, **dadurch gekennzeichnet, dass** die Proportion des oder der Azolverbindungen b) von 5 bis 15 Gew.-% des Gewichts der Zusammensetzung variiert.

13. Verwendung nach einem der Ansprüche 1 bis 12, **dadurch gekennzeichnet, dass** die Proportion des oder der Verbindungen c) von 15 bis 35 Gew.-% des Gewichts der Zusammensetzung variiert.

14. Verwendung nach einem der Ansprüche 1 bis 13, **dadurch gekennzeichnet, dass** die Zusammensetzung ein Lösungsmittel oder ein Lösungsmittelgemisch umfasst.

## Claims

1. A use of a composition comprising, in combination, as active ingredients, 5 to 25% by weight of one or more aminosilanes a), 2 to 30% by weight of one or more azole compounds b) selected from mercaptobenzothiazole, benzotriazole, mercaptobenzimidazole, tolytriazole, mercaptobenzoxazole, benzimidazole and amino-2-methoxy-6-benzothiazole, and 5 to 45% by weight of at least one compound c) selected from carboxylic acids and fatty amines, intended to incorporate a coating selected from paints, lacquers and varnishes, to inhibit corrosion of a partially or totally metallic support.

2. The use according to claim 1, **characterized in that** the aminosilane(s) a) correspond to the formula (I) (NR1R2)ₙXSiR3R4R5, wherein n is an integer at least equal to 1, R1 and R2, independently of one another, represent hydrogen, a linear, cyclic or branched, unsubstituted or substituted alkyl group preferably C1-C9, an unsubstituted or substituted aromatic group, a carboxylic group, ester, amide; X represents a linear, cyclic or branched, C1-C20 alkylene radical unsubstituted or substituted and/or interrupted by one or more heteroatoms, a linear, cyclic or branched C2-C20 alkylidene radical, unsubstituted or substituted and/or interrupted by one or more heteroatoms, R3, R4 and R5, independently of one another, represent hydrogen, a linear, cyclic or branched, unsubstituted or substituted C1-C9 alkyl group, a linear, cyclic or branched, unsubstituted or substituted C1-C9 alkoxy group, an unsubstituted or substituted aromatic group.

3. The use according to claim 1 or 2, **characterized in that** the compound(s) c) are selected from carboxylic acids corresponding to the formula (II) R6COOH wherein R6 represents an aromatic group, unsubstituted or substituted by at least one substituent selected from C1-C9 alkyl groups, C1-C9 alkoxy groups, carboxylic, amino, thiol, hydroxyl, nitrite functions.

4. The use according to any one of claims 1 to 3, **characterized in that** the compound(s) c) are selected from the amines corresponding to the formula (III) R7(NR8R9)ₘNR10R11 wherein m is equal to 0 or 1, R7 represents a hydrocarbon fatty acid chain, R8 and R9, independently of one another, represent hydrogen, a linear, cyclic or branched C1-C9 alkylene radical, unsubstituted or substituted and/or interrupted by one or more heteroatoms, a linear, cyclic or branched C2-C9 alkylidene radical, unsubstituted or substituted and/or interrupted by one or more heteroatoms, and R10 and R11, independently of one another, represent hydrogen, a linear, cyclic or branched C1-C9 alkyl group, unsubstituted or substituted and/or interrupted by one or more heteroatoms, an alkoxy group, which can be repeated, a linear, cyclic or branched C2-C9 alkylidene radical, unsubstituted or substituted and/or interrupted by one or more heteroatoms.

5. The use according to any one of claims 1 to 4, **characterized in that**:
the aminosilane(s) a) are selected from the following:
3-aminopropyltrimethoxysilane
3-aminopropyltriethoxysilane
2-aminoethyl-3-aminopropyltrimethoxysilane
triamino-functional propyltrimethoxysilane
bis (3-triethoxysilylpropyl)amine
N-(n-butyl)-3-aminopropyltrimethoxysilane
2-aminoethyl-3-aminopropylmethyldimethoxysilane
3-aminopropylmethyldiethoxysilane
3-aminopropylethyldiethoxysilane
N-cyclohexyl-3-aminopropyltrimethoxysilane
N-cyclohexylaminomethylethyldiethoxysilane
N-cyclohexylaminomethyltriethoxysilane
N-phenylaminomethyltrimethoxysilane
tri-t-butylaminosilane
triphenylaminosilane

6. The use according to any one of claims 1 to 5, **characterized in that** the compound(s) c) are selected from benzoic acid, 4-tert-butyl benzoic acid, aminobenzoic acid, toluic acid, nitrobenzoic acid, phthalic acid, ethylbenzoic acid, propylbenzoic acid, n-butylbenzoic acid, ethoxylated cocoamines, ethoxylated tallow amines, for example imino-2,2'bis-derivatives-N tallow alkyls and ethoxylated alkyl tallow amines, ethoxylated oleyl amines, diamines, for example (Z)-N-9-octadecenylpropane-1,3-diamine, N-coco-alkyltrimethylenediamines and N-tallow-alkyltrimethylenediamines.

7. The use according to any one of claims 1 to 6, **characterized in that** the composition comprises at least one aminosilane a) selected from 3-aminopropyltriethoxysilane and the aqueous amino/alkyl-functional siloxane co-oligomer, an azole compound b) selected from mercaptobenzothiazole, benzotriazole and mercaptobenzimidazole, and a compound c) selected from benzoic acid, 4-tert-butyl benzoic acid, nitrobenzoic acid, imino-2,2'bis-derivatives-N-tallow alkyls, ethoxylated alkyl tallow amines, ethoxylated (Z)-octadec-9-enylamine and (Z)-N-9-octadecenyl propane-1,3-diamine.

8. The use according to any one of claims 1 to 7, **characterized in that** the composition comprises benzoic acid and at least one of 4-tert-butyl benzoic acid and nitrobenzoic acid.

9. The use according to any one of claims 1 to 8, **characterized in that** the composition comprises at least one of benzoic acid, 4-tert-butyl benzoic acid and nitrobenzoic acid, and one of the following amines: 2,2-bis imino-N-tallow alkyl, ethoxylated tallow alkyl amines, ethoxylated (Z)-octadec-9-enylamine, (Z)-N-9-octadecenyl propane-1,3-diamine.

10. The use according to claim 9, **characterized in that** the composition comprises at least two compounds selected from benzoic acid, 4-tert-butyl benzoic acid and nitrobenzoic acid, and at least one compound selected from imino-2,2'bis-derivatives-N-tallow alkyl, ethoxylated alkyl tallow amines, ethoxylated (Z)-octadec-9-enylamine, (Z)-N-9-octadecenylpropane-1,3-diamine.

11. The use according to any one of claims 1 to 10, **characterized in that** the proportion of the aminosilane(s) a) varies from 10 to 20%, by weight based on the weight of the composition.

12. The use according to any one of claims 1 to 11, **characterized in that** the proportion of the azole compound(s) b) varies from 5 to 15%, by weight based on the weight of the composition.

13. The use according to any one of claims 1 to 12, **characterized in that** the proportion of the compound(s) c) varies from 15 to 35%, by weight based on the weight of the composition.

14. The use according to any one of claims 1 to 13, **characterized in that** said composition comprises a solvent or a mixture of solvents.
